Europäisches Patentamt

European Patent Office

Office européen des brevets

(11) Numéro de publication: **0 388 288**
**A1**

## (12) DEMANDE DE BREVET EUROPEEN

(21) Numéro de dépôt: **90400672.3**

(22) Date de dépôt: **14.03.90**

(51) Int. Cl.5: **G05D 1/02, G05D 1/03**

(30) Priorité: **14.03.89 FR 8903288**

(43) Date de publication de la demande:
**19.09.90 Bulletin 90/38**

(84) Etats contractants désignés:
**BE DE ES GB IT NL SE**

(71) Demandeur: **RENAULT AUTOMATION**
**8/10 avenue Emile Zola**
**F-92109 Boulogne-Billancourt(FR)**

(72) Inventeur: **Bontemps, Jean-Pierre**
**16 Ter, Avenue de la Tour**
**F-78340 Les Clayes Sous Bois(FR)**
Inventeur: **Zembitski, Georges**
**7, rue de Chancelier Séguier**
**F-78620 L'Etang La Ville(FR)**

(74) Mandataire: **Saint Martin, René**
**Régie Nationale des Usines Renault 8 & 10,**
**avenue Emile Zola**
**F-92109 Boulogne Billancourt(FR)**

(54) **Système robotisé de manutention.**

(57) La présente invention se rapporte à un système robotisé de stockage, manutention et de distribution de composants depuis les quais de réception vers les zones d'utilisation en passant par des ateliers de préparation et/ou des magasins de stockage, ou inversement, caractérisé en ce qu'il comprend un robot mobile (1) équipé d'un superviseur de pilotage (5) et de gestion des tâches, d'un dispositif d'apprentissage de trajectoire par clavier/écran (11), (12) ou par manipulateur à deux axes (13), (14), d'un dispositif radio (15) ou plots (16) implantés sur le passage du robot pour l'ordonnancement du processus de production en temps réel, d'un dispositif d'attelage/dételage télécommandé (9) pour la traction d'au moins une remorque et de moyens de manutention comme de fourches.

## SYSTEME ROBOTISE DE MANUTENTION

La présente invention se rapporte à un système robotisé de manutention de composants en bac, en conteneur ou sur palette depuis des quais de réception vers des zones d'utilisation en passant par des ateliers de préparation et, ou, des magasins de stockage (les opérations inverses sont également possibles).

En milieu industriel, il est courant d'utiliser pour ce genre d'opérations, des véhicules motorisés pilotés par un homme.

Une évolution vers l'automatisation consiste à utiliser des véhicules autonomes sans conducteur et guidés par un fil parcouru par un courant électrique et noyé dans le sol, ou par la lecture d'une piste réfléchissante peinte sur le sol. Ces dispositifs connus imposent une infrastructure fixe (dans le cas du fil noyé) ou tenue dans un excellent état de propreté (dans le cas de la piste réfléchissante). Bien entendu, cette infrastructure croît avec la complexité des tâches affectées au véhicule ou au nombre de véhicules en évolution sur le site.

La présente invention a pour but :
- de réaliser des ateliers de production dont les exigences de fonctionnement s'orientent vers le "tout automatique";
- d'augmenter les flux d'entrée/sortie avec le magasin <u>tout en supprimant</u> les moyens d'interfaçage traditionnellement constitués par des tables transferts à mouvements croisés;
- de regrouper au niveau d'un même système robotisé, toutes les fonctions de prise, dépose et transfert de composants;
- de permettre la production en flux tendu (Kanban,...) et l'ordonnancement du processus de production (encyclage,...) grâce à l'adjonction d'une liaison quasi temps réel (radio, plots au sol) pour les transmissions automatiques des ordres d'entrée-sortie et flux de composants.

Selon une forme préférentielle de réalisation, le système robotisé est composé de :
- un robot mobile motorisé et guidé par un système de guidage au sol d'un véhicule autonome, tel que décrit dans le brevet français n° 86/15550;
- un superviseur de gestion et de pilotage.

Le robot mobile peut être configuré avec :
- un robot multi-axes destiné à assurer des opérations sur une chaîne avec des postes fixes, ou des opérations en poursuite;
- des moyens de manutention de bacs, de conteneurs ou de palettes;
- un "dispositif robotisé de manutention pour équiper un magasin de stockage" décrit dans le brevet français n° 87/17279;
- d'une partie supérieure en configuration de table élévatrice permettant au robot mobile de se transférer sous le conteneur ou la palette pour la manutentionner;
- des moyens connexes permettant l'accouplement et le désaccouplement télécommandé des remorques elles-mêmes chargées ou déchargées par le robot mobile (ledit robot mobile pouvant se déplacer seul ou associé à une ou plusieurs remorques).

L'invention va maintenant être décrite avec plus de détails en se référant à un mode de réalisation donné à titre d'exemple et représenté par les dessins annexés, sur lesquels :
- la figure 1 représente un robot mobile qui comprend :
. des moyens intelligents de commande et de déplacement,
. un moyen d'attelage, comme un crochet à ouverture et fermeture télécommandée,
. sans équipement de manutention spécifique;
- la figure 2 représente l'architecture intelligente du robot mobile;
- la figure 3 représente un robot mobile surbaissé et transféré sous un conteneur;

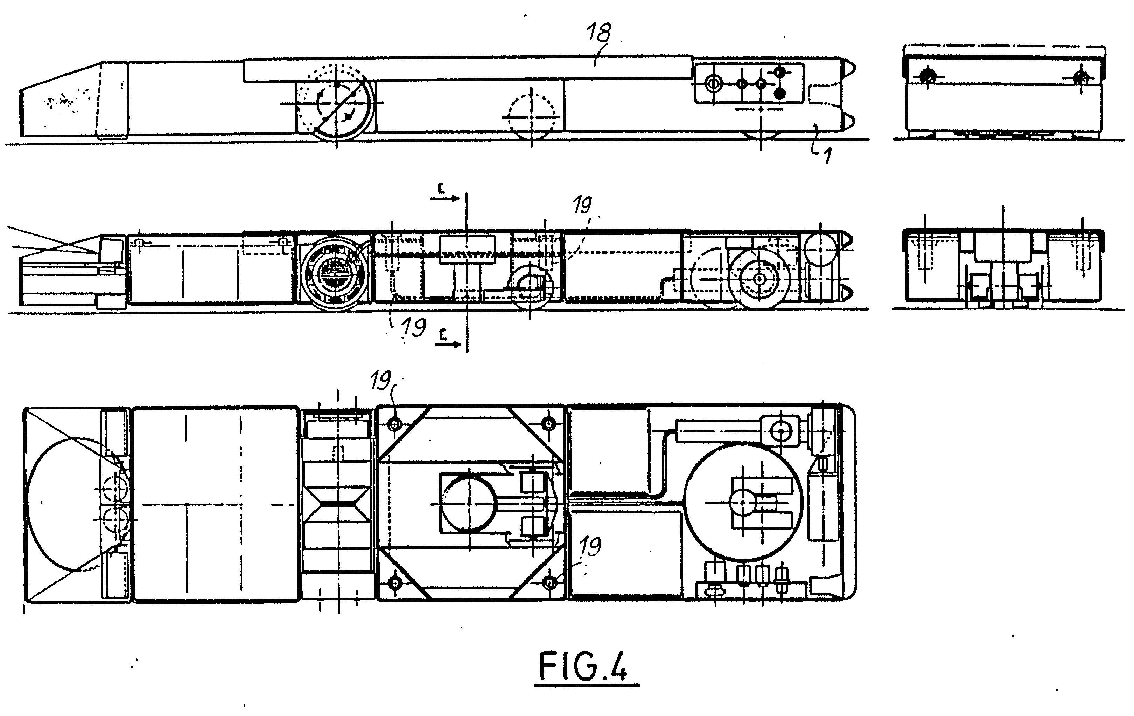

- la figure 4 représente les différentes vues du robot mobile de la figure 3;
- la figure 5 est une vue de dessus décrivant une scène transfert de composants en conteneur ou sur palette;
- la figure 6 est une vue de dessus décrivant une scène semblable, mais avec la contrainte de déposer sur le sol le conteneur ou la palette;
- la figure 7 est une vue de dessus décrivant une scène d'entrée et de sortie du système robotisé dans un magasin constitué de mini-transtockeur;
- la figure 8 est une vue de dessus décrivant la même scène que précédemment avec des conteneurs ou palettes, mais avec des moyens de manutention propres au robot et différents de ceux de la figure 6;
- la figure 9 est une vue de dessus décrivant une scène de permutation de conteneur ou de palette le long d'une chaîne de fabrication.

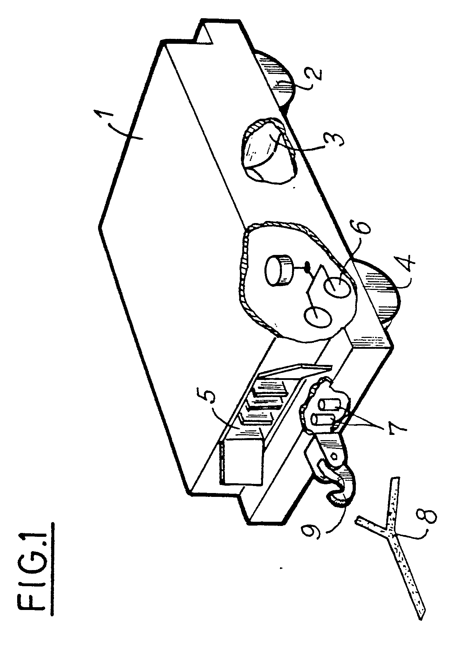

Le robot mobile représenté sur la figure 1 est constitué d'un chariot 1 équipé de roues motrices 2 accouplées à un moteur électrique d'entraînement 3. Il comporte des roues directrices 4 dont l'orientation est commandée par un superviseur de pilotage 5 et par un odomètre 6. Des capteurs 7 assurent une correction des dérives de trajectoire en recalant le robot mobile sur des clinquants en acier 8 collés sur le sol à des endroits choisis (en général, des postes d'arrêt). Un crochet d'attelage 9 télécommandé à partir du superviseur 5 permet au robot mobile son association avec une ou plusieurs remorques.

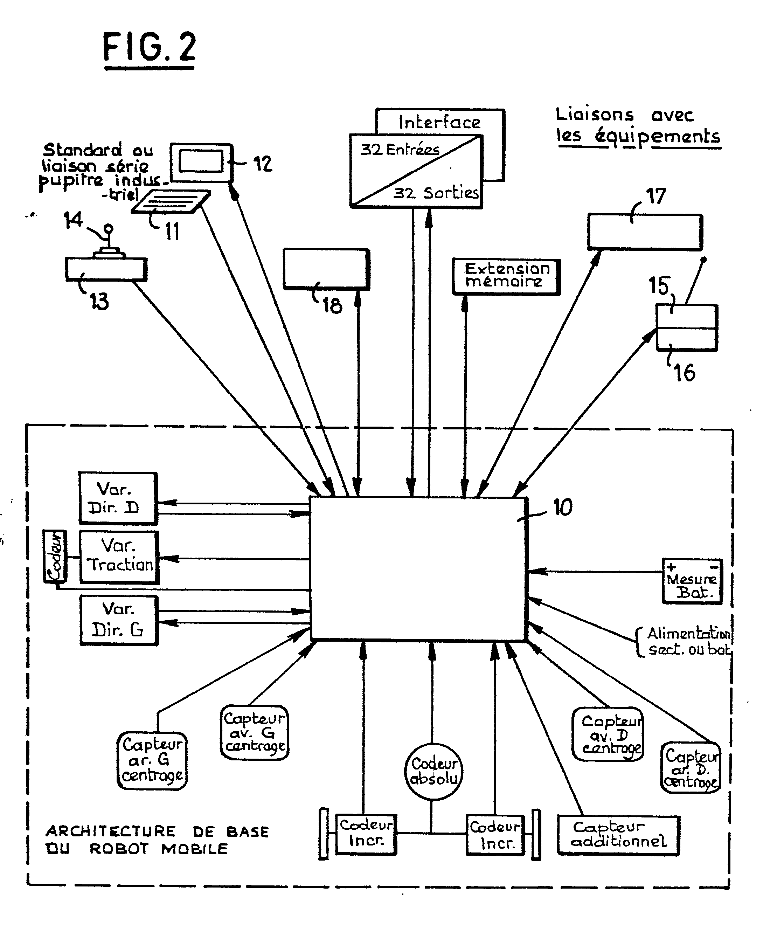

Le superviseur 10 représenté sur la figure 2 est composé par une architecture modulaire de cartes à microprocesseur assurant le fonctionnement du robot ainsi que d'interfaces permettant la connexion de :

- un clavier 11 et un écran 12 pour l'apprentissage et la rectification des tâches et des trajectoires;
- un boîtier manipulateur 13 avec un manche à deux axes 14 pour l'apprentissage et la rectification des trajectoires en mode direct sur le site;
- une liaison radio 15 avec un ou des émetteurs implantés sur le parcours du robot mobile, ou bien des plots émetteurs d'information implantés de la même façon et destinés, l'un et l'autre, à la fourniture automatique d'ordres permettant la production en flux tendu et l'ordonnancement du processus de production;
- un lecteur code barre 16 pour la reconnaissance et le contrôle des éléments manutentionnés;
- des interfaces industrielles pour la commande d'équipements divers 17, comme des fourches ou tout autre mécanisme de manutention;
- une ou plusieurs cartes d'extension mémoire pour le stockage des missions à réaliser;
- un capteur additionnel de surveillance ou de contrôle de trajectoire d'assistance de l'odomètre, comme un giromètre laser, à ultrasons, etc...

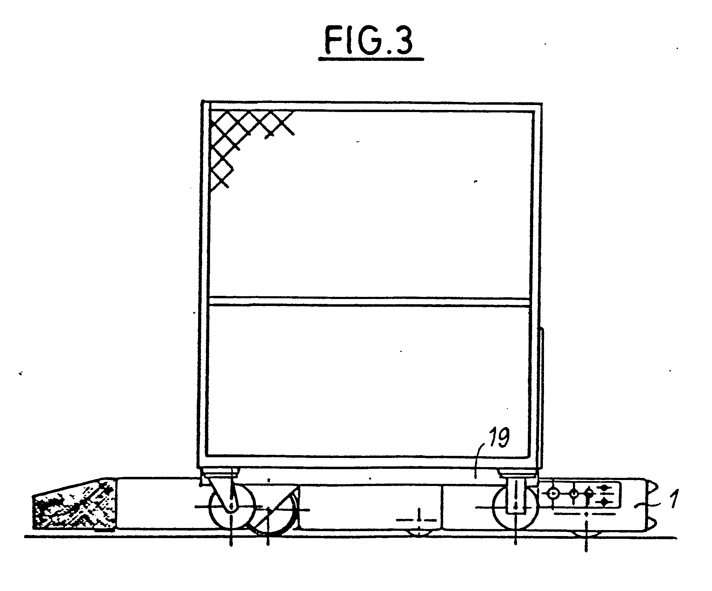

Selon une forme particulière de réalisation, le robot mobile 1 est équipé d'un plateau mobile en hauteur 18 et actionné par un mécanisme connu en soi 19. La faible hauteur d'un tel robot lui permet de se transférer sous les charges à manipuler. Un tel robot est décrit sur la figure 3.

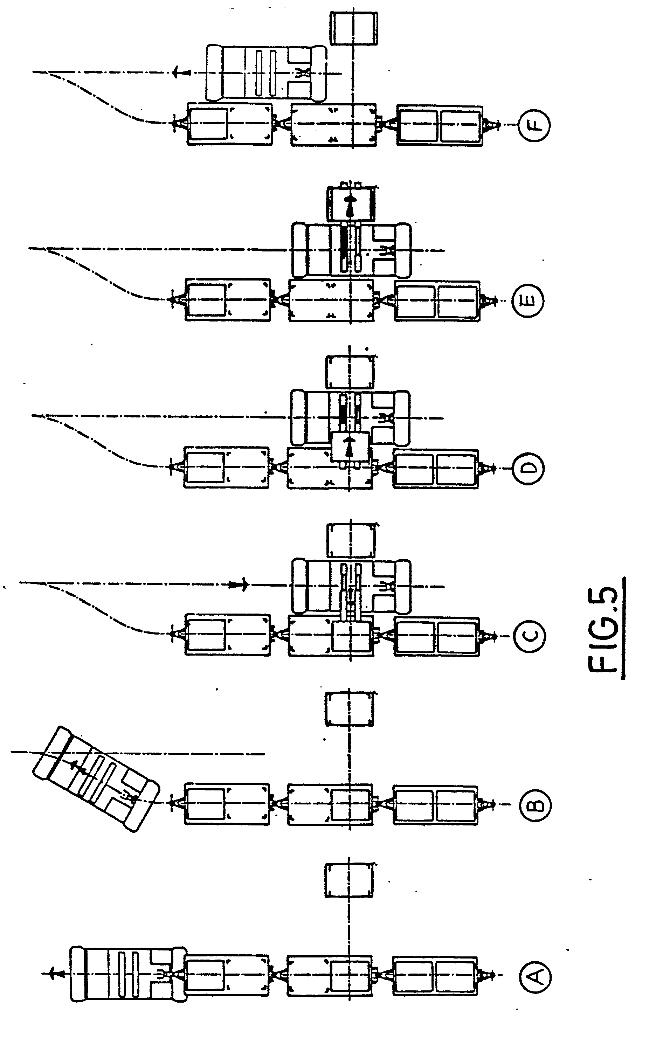

Une application du système robotisé est décrite sur la figure 5.
- en A, une scène type de transfert de composants en conteneur, ou sur palette, sont chargés sur un train de remorques;
- en B, le robot mobile se sépare du train de remorques;
- en C,D,E, le robot mobile équipé de fourches bilatérales télescopiques s'immobilise devant un poste, décharge une remorque et dépose la charge sur le poste fixe d'une zone banalisée;
- en F, le robot mobile va se réaccoupler au train de remorques et va tracter l'ensemble vers une autre zone banalisée.

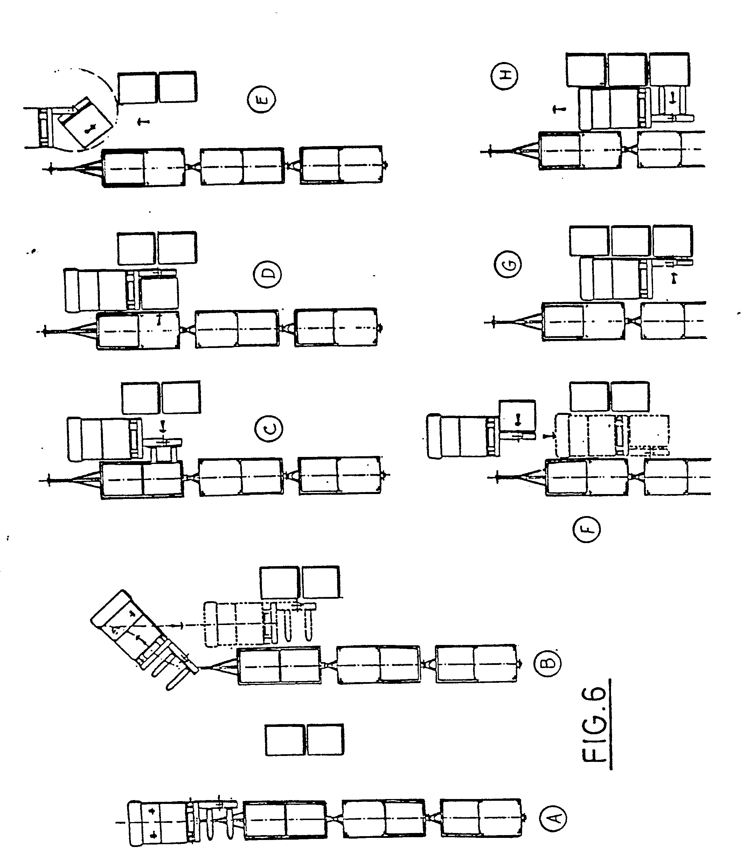

Une autre application du système robotisé est décrite sur la figure 6. En suivant les postes de A à H, on peut voir un chariot mobile effectuer des opérations de manipulation semblables à celles décrites sur la figure 5. Dans ce cas, le robot mobile est muni d'un mât de levage supportant des fourches tridirectionnelles. Les conteneurs ou les palettes transportés par les chariots sont déposés sur le sol. L'opération inverse, bien que non décrite, est aussi réalisable.

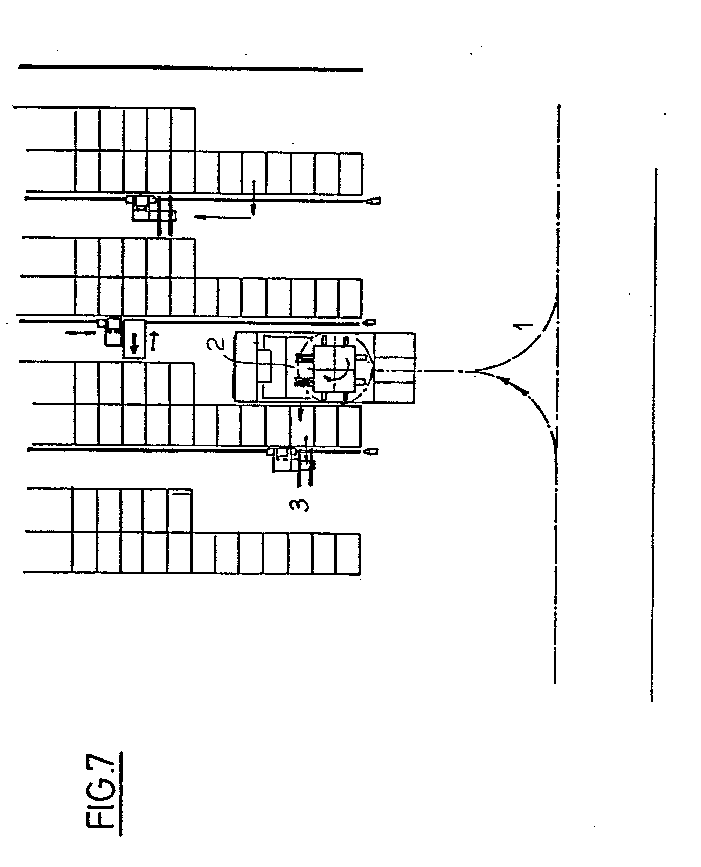

Une autre application du système robotisé est décrite sur la figure 7.

Le robot mobile équipé d'un "dispositif robotisé de manutention pour équiper un magasin de stockage" pénètre dans un magasin constitué de mini-transtockeurs. En utilisant les moyens propres au système robotisé (meuble de stockage, table monte et baisse, tournante, équipé d'un système de préhension et de transfert des bacs), il dépose les bacs contenus dans son propre magasin à la place qui leur est destinée dans le magasin principal constitué de mini-transtockeurs.

Les opérations inverses sont évidemment possibles.

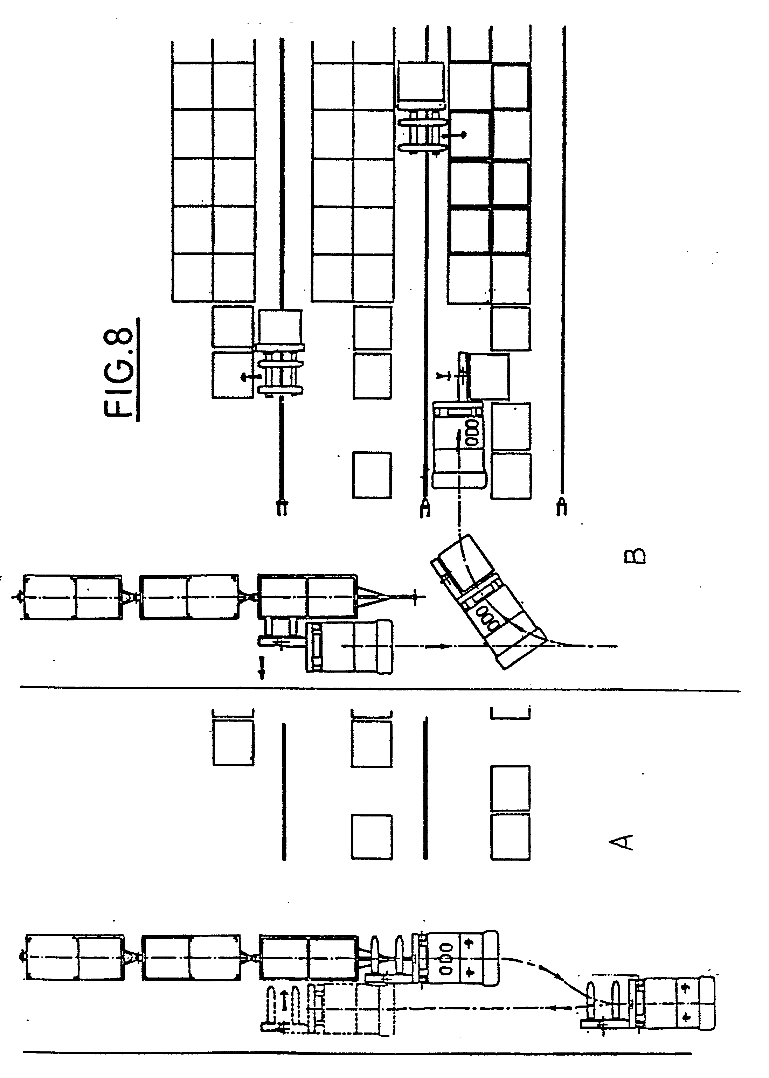

Une autre application du système robotisé est décrite sur la figure 8.
- En A, le robot mobile équipé d'un mât de levage avec fourche tridirectionnelle se sépare du train de remorques et va prendre un conteneur ou une palette sur un chariot.
- En B, le robot mobile dépose le conteneur ou la palette à la place qui lui est destinée dans un magasin à translateur ou mini translateur.

Les opérations inverses sont évidemment possibles.

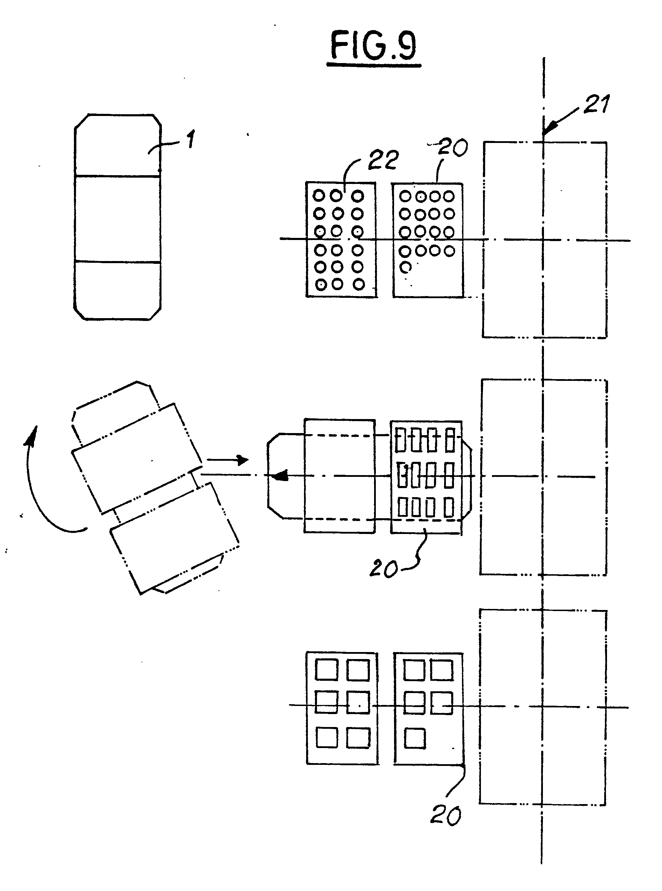

La figure 9 décrit une scène de permutation de conteneurs le long d'une ligne de production.

Des conteneurs 20 sont disposés le long de la ligne de montage 21. Des conteneurs pleins 22 sont en attente derrière les conteneurs en cours de vidage 20. La permutation des conteneurs est assurée par un robot mobile équipé d'une table élévatrice, comme décrit sur la figure 3, qui se glisse sous les conteneurs. Le robot mobile soulève ensemble les deux conteneurs 20 et 22, il s'écarte de la chaîne, il effectue un demi-tour sur lui-même et vient déposer le conteneur plein 22 à sa place le long de la chaîne.

Si l'espace est suffisant, il effectue le demi-tour sur place. Il assure également le remplacement des conteneurs vides en temps masqué.

Il est bien entendu que l'on peut, sans sortir du cadre de l'invention, imaginer des variantes et des perfectionnements de détail et même envisager l'emploi de moyens équivalents.

## Revendications

1°) Système robotisé de stockage, manutention et distribution de composants à partir de quais de réception vers des zones d'utilisation en passant par des ateliers de préparation et/ou des magasins de stockage, ou inversement avec un robot mobile constitué de :
- un chariot (1) équipé de roues motrices (2) accouplées à un moteur électrique d'entraînement (3) et de roues directrices (4),
- un superviseur de pilotage (5) commandant l'orientation desdites roues directrices (4),

- un odomètre (6),
- des capteurs (7) qui assurent une correction des dérives de trajectoire,
caractérisé en ce que ledit superviseur qui est composé d'une architecture modulaire de cartes à microprocesseur qui assure le fonctionnement du robot mobile possède des interfaces qui permettent la connexion de :
- un clavier (11) et un écran (12) pour l'apprentissage et la rectification des tâches et des trajectoires,
- un boîtier manipulateur (13) avec un manche à deux axes (14) pour l'apprentissage et la rectification des tâches et des trajectoires.

2°) Système robotisé selon la revendication 1, caractérisé par le fait qu'il est équipé d'un dispositif d'attelage - dételage télécommandé (9) qui lui permet de tracter au moins une remorque.

3°) Système robotisé selon les revendications 1 et 2, caractérisé par le fait que l'ordonnancement du procédé de manutention est assuré par le captage d'informations fournies par des plots, possédant une gravure de type code-barre (16), implantés sur le passage du robot mobile.

4°) Système robotisé selon l'une quelconque des revendications 1 à 3, caractérisé par le fait que le robot mobile est équipé de moyens de manutention comme des fourches bilatérales télescopiques.

5°) Système robotisé selon l'une quelconque des revendications 1 à 3, caractérisé par le fait que le robot mobile est équipé d'un mât de levage avec des fourches tri-directionnelles.

6°) Système robotisé selon l'une quelconque des revendications 1 à 3, caractérisé par le fait que le robot mobile est une table élévatrice (18) (19).

# FIG.1

EP 0 388 288 A1

# FIG.2

Standard ou
liaison série
pupitre indus.
-triel

12

Interface

32 Entrées

32 Sorties

Liaisons avec
les équipements

14

11

17

13

18

Extension
mémoire

15

16

Var.
Dir. D

10

Codeur

Var.
Traction

Mesure
Bat.

Var.
Dir. G

Alimentation
sect. ou bat.

Capteur
ar. G
centrage

Capteur
av. G
centrage

Codeur
absolu

Capteur
av. D
centrage

Capteur
ar. D.
centrage

ARCHITECTURE DE BASE
DU ROBOT MOBILE

Codeur
Incr.

Codeur
Incr.

Capteur
additionnel

# FIG.3

FIG.4

FIG.5

FIG.6

EP 0 388 288 A1

FIG.7

EP 0 388 288 A1

FIG.8

A

B

# FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | EP-A-0304942 (NISSAN MOTOR CO.,LTD.)<br>* colonne 6, ligne 5 - colonne 7, ligne 19; figures 1-14 * | 1, 4-6 | G05D1/02<br>G05D1/03 |
| Y | | 3 | |
| Y | GB-A-2143969 (MANNESMANN AG)<br>* page 1, ligne 1 - page 1, ligne 76; figures 1, 2 * | 3 | |
| Y | EP-A-0302569 (EUROPE CONTAINER TERMINUS B.V.)<br>* colonne 5, ligne 14 - colonne 8, ligne 50; figures 1-7 * | 1-3 | |
| A | | 4-6 | |
| Y | GB-A-2087120 (BELL&HOWELL COMP.)<br>* page 2, ligne 79 - page 5, ligne 80; figures 1-13 * | 1-3 | |
| A | EP-A-0169156 (REDOUTE CATALOGUE SA)<br>* revendications 1-10; figures 1-14 * | 1, 4-6 | |
| | | | **DOMAINES TECHNIQUES RECHERCHES (Int. Cl.5 )** |
| A | EP-A-0159680 (BARRETT ELECTRONICS CORP.)<br>* page 4, ligne 5 - page 4, ligne 53; figures 1-3 * | 1, 3 | G05D<br>B65G<br>B66F |

Le présent rapport a été établi pour toutes les revendications

| Lieu de la recherche | Date d'achèvement de la recherche | Examinateur |
|---|---|---|
| LA HAYE | 12 JUIN 1990 | FOURRICHON P.M.L. |